Europäisches Patentamt

European Patent Office

Office européen des brevets

(19)

(11) Veröffentlichungsnummer: **0 175 248**
**B1**

(12) **EUROPÄISCHE PATENTSCHRIFT**

(45) Veröffentlichungstag der Patentschrift: 02.05.90

(21) Anmeldenummer: 85111348.0

(22) Anmeldetag: 07.09.85

(51) Int. Cl.⁵: **A 21 B 1/26, A 21 B 1/50**

(54) Backofen mit Heissluftumwälzheizung.

(30) Priorität: 15.09.84 DE 3434000

(43) Veröffentlichungstag der Anmeldung:
26.03.86 Patentblatt 86/13

(45) Bekanntmachung des Hinweises auf die
Patenterteilung:
02.05.90 Patentblatt 90/18

(84) Benannte Vertragsstaaten:
AT BE CH DE FR GB IT LI NL SE

(56) Entgegenhaltungen:
EP-A-0 138 348
DE-A-2 941 853
FR-A-2 055 811

(73) Patentinhaber: Werner & Pfleiderer GmbH
Theodorstrasse 10 Postfach 30 12 20
D-7000 Stuttgart 30 (DE)

(72) Erfinder: Schröder, Helmut, Dipl.-Ing. (FH)
Im Krautgarten 10
D-7120 Bietigheim-Bissingen (DE)

Courier Press, Leamington Spa, England.

EP 0 175 248 B1

## Beschreibung

Die Erfindung betrifft einen Backofen nach dem Oberbegriff des Patentanspruches 1.

Der grundsätzliche Aufbau von Backöfen der vorstehend erwähnten Gattung, die auch als Backschrank bezeichnet wird, ist beispielsweise bekannt aus der DE—OS 24 35 138. Bei diesem Backschrank steht das üblicherweise als Wagen gestaltete Etagengestell während des Backens unbeweglich auf dem Boden des Backraums und die Heißluft wird abwechselnd in entgegengesetzten Richtungen durch den Backraum und die Etagen des Gestells umgewälzt. Zum Stand der Technik gehören auch Backschränke, wie sie z.B. aus der DE—OS 14 32 916 bekannt sind und bei denen das fahrbare Etagengestell auf einer während des Backbetriebs rotierenden Drehscheibe steht. Deshalb kann hier die Heißluft ständig in der gleichen Richtung umgewälzt werden. Ein anderes Beispiel ist aus der FR8A—2 055 811 bekannt.

Die bekannten Backschränke sind im allgemeinen so ausgeführt, daß das den Backraum umschließende Gehäuse sich in einem aus profiliertem Stabmaterial zusammengesetzten Gestell befindet, in dem auch die Heizund Umwälzeinrichtung sowie der Schaltschrank untergebracht sind. Außen am Gestell sind Verkleidungsbleche befestigt und der Raum zwischen Gehäuse und Verkleidung ist mit Isoliermaterial gefüllt.

Backschränke finden in zunehmendem Umfang Eingang in handwerkliche Bäckereien, deren Räumlichkeiten jedoch häufig sehr beengt sind. Vor allem die Raumhöhe der Backlokale sowie die Abmessungen der Türen sind oftso begrenzt, daß die Backschränke nur im zerlegten Zustand angeliefert werden können und dann an Ort und Stelle montiert werden müssen. Zu diesem Zweck sind bei den bekannten Backöfen die Gehäuse in einer senkrechten, durch die Beschickungsöffnung gehenden Ebene in zwei Abschnitte unterteilt, die dann im Backlokal zusammengeschraubt werden. Wenn man davon ausgeht, daß in vielen Fällen nur eine Backlokalhöhe von 2,4 m für die Aufstellung des Backschranks und nur normale Türöffnungen mit einer Breite von 1 m und einer Höhe von 2 m für das Einbringen der Backschrankteile zur Verfügung stehen, so ergeben sich bei der senkrechten Unterteilung des Gehäuses eines die vorhandene Raumhöhe weitgehend ausfüllenden Backschrankes relativ lange und unhandliche Bauteile. Abgesehen davon, daß das Zusammenschrauben des Gehäuses ebenso wie der Zusammenbau des Gestells und der übrigen Bestandteile des Backschranks unter den erwähnten räumlichen Verhältnissen sehr umständlich ist, besteht die zusätzliche Schwierigkeit, die über den Boden des Backraums verlaufende Teilfuge so dicht zu bekommen, daß dort kein Kondensat austritt. Obwohl einige der auf dem Markt bekannten Backschränke bereits weitgehend vormontiert sind, bedarf es noch eines beträchtlichen Aufwands an Arbeit bei der Aufstellung des Backschranks, wozu in manchen Fällen auch noch Schweißarbeiten für das dampfdichte Verbinden von Gehäuseteilen, Luftführungskanälen etc. gehören.

Aus der DE—PS 604 749 ist ein zerlegbarer Backofen mit in einen wärmeisolierten Mantel eingesetzten, aus Stahlblech hergestellten Backkammern bekannt, bei welchem die Backkammern und die zwischen ihnen gelegenen Heizkanäle aus übereinander gestapelten, durch Spannbolzen zusammengehaltenen Blechhauben hergestellt sind, die mit ihren Randleisten sich dicht schließend auf der Decke der darunterliegenden Blechhaube abstützen. Dieser Backofen stellt keinen Backschrank dar, sondern einen Etagenbakofen, bei dem mehrere, für sich abgeschlossene Backräume mit jeweils separater Heizung übereinander angeordnet sind. Die Beheizung der Backräume erfolgt indirekt durch Strahlung, wogegen bei der als Backschrank bezeichneten Backofengattung eine konvektive Beheizung durch die im Backraum umgewälzte Heißluft vorgesehen ist.

Der Erfindung liegt die Aufgabe zugrunde, einen Backofen gemäß dem Oberbegriff des Patentanspruches 1 so zu verbessern, daß er mit geringem Aufwand an Arbeit und Zeit insbesondere unter beengten räumlichen Verhältnissen aufgestellt und in seiner Höhe den Platzverhältnissen leicht angepaßt werden kann.

Die Aufgabe wird erfindungsgemäß durch die im Kennzeichnungsteil des Patentanspruches 1 angegebenen Merkmale gelöst.

Im Gegensatz zum Stand der Technik ist bei dem erfindungsgemäßen Backofen bzw. Backschrank das den Backraum umschließende Gehäuse durch waagrechte Ebenen unterteilt, wodurch im wesentlichen quaderförmige Segmente entstehen, die in ihrer Höhe so bemessen werden können, daß sie sich auch durch normale Türöffnungen bequem transportieren lassen. Das Aufstellen des Backofens geschieht in einfacher Weise durch Aufeinanderstapeln der Segmente, wobei allein schon durch deren Eigengewicht sich ein relativ fester Verbund ergibt. Aufwendige Schrauboder gar Schweiß-Verbindungen erübrigen sich. Durch unterschiedliche Höhen der Segmente lassen sich Backöfen erstellen, welche die Platzverhältnisse vorhandener Backlokale optimal ausnutzen, wobei zweckmäßigerweise die Höhen der den Backraum oben und unten begrenzenden Segmente nicht verändert werden. Die Segmente können im Herstellerwerk vollständig vormontiert werden, so daß nach dem Aufeinanderstapeln der Segmente am Aufstellungsort der Backofen in kürzester Zeit betriebsbereit ist. Die Erfindung bewirkt deshalb nicht nur eine erhebliche Vereinfachung der Endmontage des Backofens sondern auch einen beachtlichen Rationalisierungseffekt bei der Herstellung sowie bei der Lagerhaltung und beim Transport der Segmente.

Die Merkmale der Unteransprüche betreffen zweckmäßige Ausgestaltungen der Erfindung, welche bei der nachfolgenden Beschreibung der in den Zeichnungen dargestellten Ausführungsbeispiele näher erläutert werden. Es zeigt

Fig. 1 einen senkrechten Schnitt durch einen aus aufeinandergestapelten Segmenten gebildeten Backofen,

Fig. 2 einen waagrechten Schnitt nach der Linie II—II in Fig. 1,

Fig. 3 einen weiteren waagrechten Schnitt nach der Linie III—III in Fig. 1,

Fig. 4 eine perspektivische Darstellung des Backofens nach Fig. 1 mit voneinander abgerückten Segmenten und

Fig. 5 einen waagrechten Schnitt durch einen Backofen mit zwei nebeneinander befindlichen Backräumen.

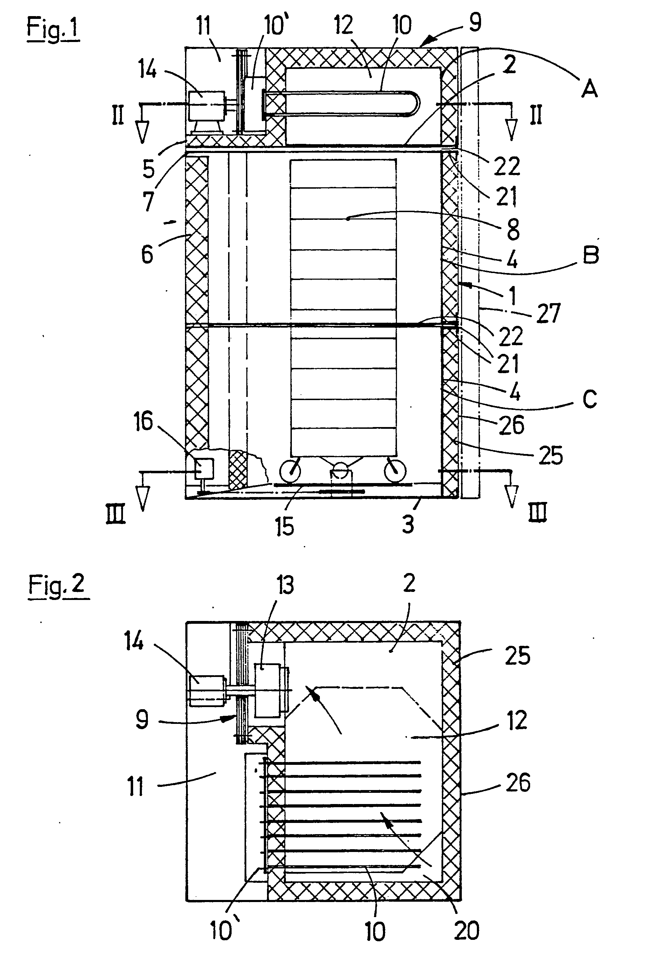

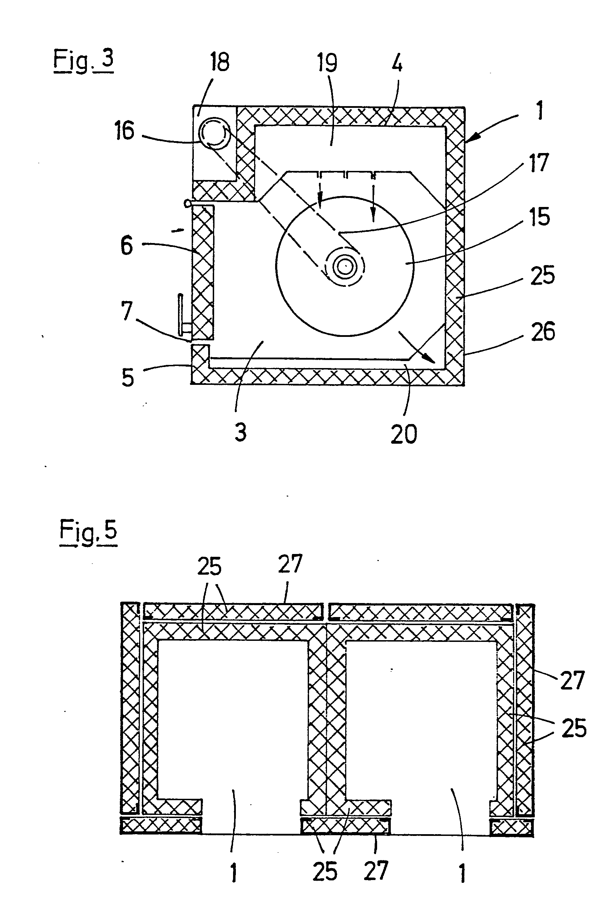

Der Backraum des aus den Fig. 1—4 ersichtlichen Backofens ist von einem Gehäuse 1 umschlossen, welches eine Decke 2, einen Boden 3 und ringsum angeordnete senkrechte Wände 4 aufweist. In der Stirnwand 5 ist eine vom Boden 3 bis zur Decke 2 reichende und durch eine Tür 6 verschließbare Öffnung 7 vorgesehen, die für das Ein und Ausbringen eines Etagengestells 8 bestimmt ist. In dem auf Rollen fahrbaren · Etagengestell 8 befindet sich das Backgut, welches von Heißluft beaufschlagt wird, die von einer oberhalb des Backraums angeordneten Heiz und Umwälzvorrichtung 9 erhitzt und durch den Backraum umgewälzt wird.

Zum Erhitzen der umgewälzten Luft dienen im Beispielsfall elektrische Heizstäbe 10. Es könnte statt dessen auch ein von einem Öl o- der Gasbrenner beheizter Wärmetauscher vorgesehen sein, wobei dann der Brenner in derselben Nische 11 oben an der Stirnwand 5 untergebracht wäre, in der sich beim Ausführungsbeispiel die Anschlüsse 10' der Heizstäbe befinden. Die Heizstäbe 10 bzw. ein etwaiger Wärmetauscher liegen im Saugraum 12 eines Umwälzventilators 13, dessen Antriebsmotor 14 ebenfalls in der Nische 11 untergebracht ist. Dadurch sind die Teile der Heiz- und Umwälzvorrichtung 9 von der Stirnseite des Backofens her leicht zugänglich.

Auf dem Boden 3 des Gehäuses ist eine Drehscheibe 15 gelagert, auf der das fahrbare Etagengestell 8 steht und die von einem außerhalb des Backraums befindlichen Antriebsmotor 16 über eine Kette 17 in Drehung versetzt wird. Der Antriebsmotor 16 ist in einer senkrechten Nische 18 der Stirnwand 5 untergebracht. In dieselbe Nische wird bei der Montage des Backofens ein nicht dargestellter Schaltschrank eingesetzt, von dem aus die verschiedenen Einrichtungen des Backofens gesteuert werden.

Innerhalb des Gehäuses 1 befinden sich an gegenüberliegenden Seiten der Druckkanal 19 und der Saugkanal 20 für die Heißluft, welche durch mit Schlitzdüsen oder Löchern versehene Bleche gebildet werden, deren Grundrisse als dem Umfang der Drehscheibe 15 angepaßte Vielecke gestaltet sind. Der Saugkanal 20 mündet unmittelbar in den oberhalb des Backraums befindlichen Saugraum 12 mit den Heizstäben 10, von wo die erhitzte Luft durch den Umwälzventilator 13 in den direkt unter ihm befindlichen Druckkanal 19 geblasen wird. Diese Anordnung ergibt eine kompakte Bauform der Heiz- und Umwälzvorrichtung 9.

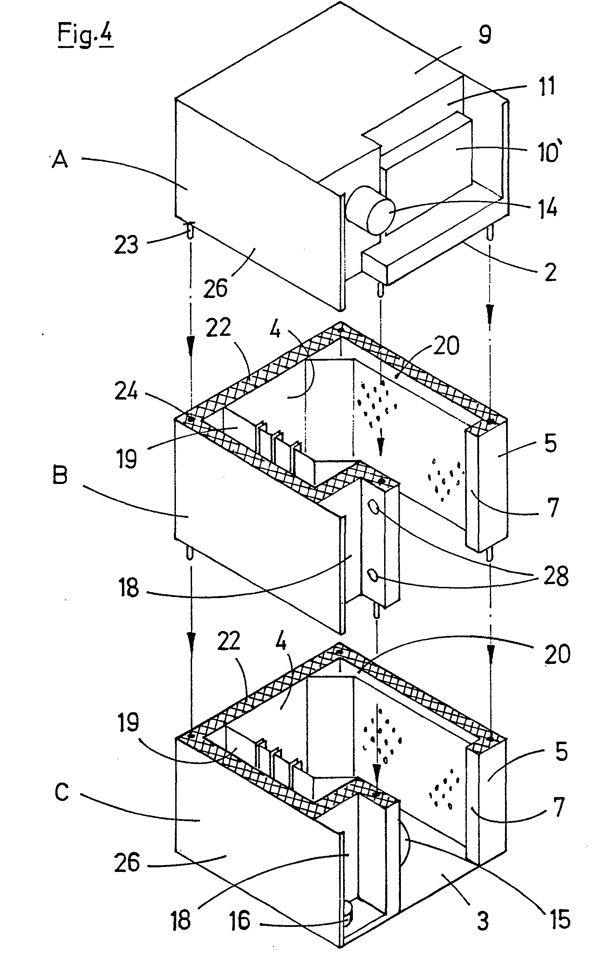

Aus den Fig. 1 und 4 ist der Aufbau des Backofens aus drei aufeinandergestapelten Segmenten A, B und C zu erkennen. Die Segmente haben alle den gleichen Grundriß, der im Beispielsfall annähernd quadratisch ist. Das oberste Segment A enthält die Decke 8 des Gehäuses mit der darüber angeordneten Heiz-und Umwälzvorrichtung 9. Das unterste Segment C umfaßt den Boden 3 und einen Teil der senkrechten Wände. Das mittlere Segment B weist nur senkrechte Wände auf, so daß die senkrechten Wände 4 des Gehäuses von mindestens zwei Segmenten gebildet werden.

Die Segmente A, B und C weisen einander gegenüberliegende waagrechte Stapelflächen 21 auf, mit denen sich die Segmente aufeinander abstützen und durch die eine sichere gegenseitige Auflage der Segmente gewährleistet ist. Die Stapelflächen werden zweckmäßigerweise durch nach außen gerichtete waagrechte Abkantungen der senkrechten Wände 4 gebildet. Zwischen den Stapelflächen 21 sind Dichtungen 22 aus wärmebeständigem Material angebracht. Sie bestehen beispielsweise aus flachem Silikonkautschuk oder Glasseidegewebe und können als Streifen selbstklebend auf jeweils einer der sich gegenüberliegenden Stapelflächen 21, vorzugsweise auf den nach oben weisenden Stapelflächen der Segmente befestigt sein. Die Stapelflächen 21 verleihen den Segmenten eine so große Stabilität, daß allein durch Aufeinandersetzen der Segmente ein betriebsfertiges Gehäuse 1 entsteht.

Falls notwendig, können einfache Klammern die Verbindung der Segmente untereinander sichern.

Um die Segmente beim Aufeinanderstapeln genau zu positionieren, sind die Stapelflächen 21 mit ineinandergreifenden Fixierungen versehen, welche - wie in Fig. 4 - dargestellt aus mindestens zwei Paßstiften 23 an der Stapelfläche des einen Segments und entsprechenden Bohrungen 24 an der gegenüberliegenden Stapelfläche des anderen Segments bestehen. Es können auch andere geeignete Fixierhilfen, wie beispielsweise Nut und Feder vorgesehen sein.

Vorteilhaft ist eine Ausgestaltung der Segmente B und C in der Weise, daß die senkrechten Wände jedes Segments aus oben und unten U-förmig abgekanteten Blechen bestehen, wobei in dem zwischen den Ebenen der U-Schenkel gelegenen Raum die Isolierung 25 untergebracht ist (Fig. 1). Als Isolierung kommen vorzugsweise Matten aus Glas-oder Steinwolle in Betracht, die zwischen den U-Schenkeln ohne zusätzliche Befestigungsmittel gehalten sind. Die waagrechten Stege der U-förmigen Abkantungen bilden zugleich die Stapelflächen 21.

Zur Anpassung an unterschiedliche Höhen des Backraums wird zweckmäßigerweise nur die Höhe des mittleren Segments B geändert, weil dort ausschließlich senkrechte Wände vorhanden sind. Die Höhen des untersten Segments C und insbesondere des obersten Segments A werden wegen der dort enthaltenen Betriebsvorrichtungen möglichst bei allen Backraumgrößen konstant gehalten. Vorteilhaft ist es, wenn die senkrechten Wände eines Segments eine Höhe aufweisen, die kleiner als 1000 mm ist und vorzugsweise 950 mm beträgt. Dies ist im Ausführungsbeispiel bei dem Segment B der Fall, welches als größtes der drei Segmente die Abmessungen 1400 × 1400 × 950 mm aufweist. Mit diesen Abmessungen kann das Segment noch durch Türöffnungen von Im Breite und 2m Höhe transportiert werden. Die Segmenthöhe von 950 mm ist auch deshalb sehr günstig, weil dann Edelstahlbleche mit einer Normbreite von 1250 mm bei nur geringem Verschnitt verarbeitet werden können.

Die an den Außenseiten der Wände 4 angebrachten Isolierungen 25 sind durch Verkleidungen 26 abgedeckt, die jeweils über die Höhe eines Segments reichen. Es braucht nicht in jedem Fall die gesamte erforderliche Isolierung direkt an den Außenseiten der Wände 4 angebracht zu sein, sondern es kann auch ein Teil der Isolierung sich in einer Kassette 27 befinden, die als Verkleidung an der Außenseite der Wand 4 befestigt ist. Diese Anordnung ist in Fig. 5 dargestellt, wobei dort zwei aus aufeinandergestapelten Segmenten gebildete Gehäuse 1 unmittelbar nebeneinandergestellt und der so entstandene Block nur auf seinen Außenseiten mit den die zusätzliche Isolierung 25 enthaltenden Kassetten 27 verkleidet ist. Bei einer derartigen Batterieaufstellung von zwei oder mehreren Backöfen genügt es, wenn nur die Kassetten an den Sichtseiten aus Edelstahl bestehen. Die an der Wand des Backlokals stehenden oder anderweitig verdeckten Seiten können dann mit Kassetten aus verzinktem Stahlblech abgedeckt sein. Vorteilhaft ist es, wenn die Kassetten über die ganze Höhe des Backofens reichen, weil dann Wärmebrücken an den Stoßstellen der Segmente vermieden werden. Eine derartige Anordnung der Kassetten 27 ist in Fig. 1 mit strichpunktierten Linien angedeutet.

Die Segmente A, B, C sind im Herstellerwerk komplett vormontiert. Sie ergeben deshalb durch einfaches Aufeinanderstapeln und ohne Hilfe von speziell ausgebildetem Montagepersonal einen vollständigen Backofen, wobei das Segment A die Heiz-und Umwälzvorrichtung mit bereits betriebsfertig eingestellter Übertemperatursicherung und evtl. Saugzugregelung, das Segment B eine Beleuchtungsanlage 28 und das Segment C die Drehscheibe 15 samt deren Antrieb enthält. Die Beleuchtung kann auch in der Decke 8 in der Nähe der Öffnung 7, d.h. also im Segment A untergebrachtsein, so daß das Segment B überhaupt keine elektrischen Anlagenteile aufweist. Die Segmente B und C enthalten außerdem noch Abschnitte der mit Schlitzdüsen oder Löchern versehenen Bleche, welche den Druckkanal 19 und den Saugkanal 20 bilden und in Fig. 4 eine von der Vieleckform abweichende Gestalt aufweisen.

Diese Bleche können auch separate Bauteile sein, die über die ganze Höhe des Backraums reichen und erst nach der durch Aufeinanderstapeln der Segmente A, B, C erfolgten Bildung des Gehäuses 1 eingesetzt werden. Nach Einhängen der Tür 6 in die Öffnung 7 und des nicht dargestellten Schaltschranks in die Nische 18 sowie Herstellung vorbereiteter Steckverbindungen zwischen den elektrischen Anlagenteilen ist der Backofen betriebsbereit.

**Patentansprüche**

1. Backofen mit Heißluftumwälzheizung, in dessen Backraum die von einer oberhalb des Backraums angeordneten Heiz- und Umwälzvorrichtung (9) erhitzte und umgewälzte Heißluft das in einem Etagengestell (8) befindliche Backgut beaufschlagt und der Backraum von einem Gehäuse (1) umschlossen ist, welches aus mehreren Abschnitten zusammengesetzt ist und eine Decke (2), einen Boden (3) sowie ringsum angeordnete senkrechte Wände (4) aufweist, wobei in der Stirnwand (5) eine vom Boden (3) bis.zur Decke (2) reichende, durch eine Tür (6) verschließbare Öffnung (7) zum Ein- und Ausbringen des Etagengestells (8) vorgesehen ist und die Außenseiten der Wände (4) mit einer Isolierung (25) versehen sind, die von einer Verkleidung (26) abgedeckt ist, dadurch gekennzeichnet, daß das Gehäuse aus mehreren aufeinandergestapelten Segmenten (A, B, C) mit gleichem Grundriß besteht, wobei das oberste Segment (A) die Decke (2) mit der darüber angeordneten Heiz- und Umwälzvorrichtung (9) und das unterste Segment (C) den Boden (3) des Gehäuses (1) enthält und die senkrechten Wände (4) von mindestens zwei Segmenten (B, C) gebildet werden.

2. Backofen nach Anspruch 1, dadurch gekennzeichnet, daß die Segmente (A, B, C) einander gegenüberliegende waagrechte Stapelflächen (21) aufweisen, zwischen denen Dichtungen (22) aus wärmebeständigem Material angebracht sind.

3. Backofen nach Anspruch 2, dadurch gekennzeichnet, daß die Stapelflächen (21) mit ineinandergreifenden Fixierungen (23, 24) versehen sind.

4. Backofen nach Anspruch 1, dadurch gekennzeichnet, daß die senkrechten Wände (4) innerhalb eines Segments (B, C) aus oben und unten U-förmig abgekanteten Blechen bestehen, wobei in dem zwischen den Ebenen der U-Schenkelgelegenen Raum die Isolierung (25) untergebracht ist.

5. Backofen nach Anspruch 4, dadurch gekennzeichnet, daß die senkrechten Wände (4) innerhalb eines Segments (B) eine Höhe aufweisen, die kleiner als 1000 mm ist und vorzugsweise 950 mm beträgt.

6. Backofen nach Anspruch 1, dadurch gekennzeichnet, daß die Verkleidung aus mit der Isolierung (25) versehenen Kassetten (2) besteht, die an der Außenseite der Wände (4) angebracht sind.

7. Backofen nach Anspruch 6, dadurch gekennzeichnet, daß die Kassetten (2) über die ganze Höhe des Backofens reichen.

**Revendications**

1. Four de boulangerie à recirculation d'air chaud, dans la chambre de cuisson duquel l'air, chauffé et mis en circulation par un dispositif (9) de chauffage et ventilation, monté au-dessus de cette chambre, agit sur le produit à cuire qui se trouve sur une étagère (8), ladite chambre de cuisson étant entourée par une enveloppe (1) composée de plusieurs segments et comportant un plafond (2), une sole (3) ainsi que des parois verticales (4) disposées sur tous les côtés, une ouverture ou baie (7), qui est destinée à laisser entrer et sortir cette étagère (8) et qui peut être fermée par une porte (6) étant ménagée, de la sole (3) au plafond (2), dans la paroi antérieure (5) et les faces extérieures des parois (4) étant munies d'une matiére isolante (25) qui est recouverte par un revêtement (26), four caractérisé en ce que l'enveloppe est composée de plusieurs segments (A, B, C) superposés ayant la méme forme en section horizontale, le segment supérieur (A) contenant le plafond (2) et le dispositif (9) de ·chauffage et ventilation, le segment inférieur (C) contenant la sole (3) de cette enveloppe, et les parois verticales (4) étant formées par au moins deux segments (B, C).

2. Four de boulangerie selon la revendication 1, caractérisé en ce que les segments (A, B, C) présentent des surfaces (21) horizontales de superposition, qui se font vis-à-vis et entre lesquelles sont disposés des joints (22) en une matière résistant à la chaleur.

3. Four de boulangerie selon la revendication 2, caractérisé en ce que les surfaces (21) de superposition comportent des éléments (23, 24) d'assemblage par emmanchement.

4. Four de boulangerie selon la revendication 1, caractérisé en ce que, dans un même segment (B, C), les parois verticales (4) sont composées de plaques de tôle repliées en U en haut et en bas, l'isolant (25) étant disposé dans l'espace situé entre les plans des branches des U.

5. Four de boulangerie selon la revendication 4, caractérisé en ce que, dans un segment (B), les parois verticales (4) ont une hauteur inférieure à 1000 mm et avantageusement égale à 950 mm.

**Claims**

1. Baking oven, with hot air circuation, in the baking space of which the hot air, which has been heated and circulated by a heating and circulating equipment (9) arranged above the baking space, acts on the stock to be baked, which is disposed in a shelf unit (B),and the baking space is enclosed by a housing (1), which is composed of several sections and displays a ceiling (2), a floor (3) as well as vertical walls (4) arranged all around, wherein an opening (7), which reaches from the floor (3) to the ceiling (2) and is closable by a door (6), is provided for bringing the shelf unit (8) in and out and the outward sides of the walls (4) are provided with an insulation (25), which is covered by a cladding (26), characterised thereby, that the housing consists of several segments (A, B, C), which are of the same horizontal cross-section and stacked one upon the other, wherein the uppermost segment (A) contains the ceiling (2) with the heating and circulating equipment (9) arranged thereover and the lowermost segment (C) contains the floor (3) of the housing (1) and the vertical walls (4) are formed by at least two segments (B, C).

2. Baking oven according to claim 1, characterised thereby, that the segments (A, B, C) display mutually opposite horizontal stacking surfaces (21), between which seals (22) of heat-resistant material are mounted.

3. Baking oven according to claim 2, characterised thereby, that the stacking surfaces (21) are provided with inter-engaging fixings (23, 24).

4. Baking oven according to claim 1, characterised thereby, that the vertical walls (4) within a segment (B, C) consist of sheet metal plates bent over in U-shape at the top and the bottom, wherein the insulation (25) is housed in the space lying between the planes of the U-limbs.

5. Baking oven according to claim 4, characterised thereby, that the vertical walls (4) within a segment (B) display a height which is smaller than 1000 millimetres and preferably amounts to 950 millimetres.

EP 0 175 248 B1

Fig.1

Fig.2

1

EP 0 175 248 B1

Fig. 3

Fig. 5

2

Fig.4